# EUROPÄISCHE PATENTSCHRIFT

(11) **EP 1 176 865 B1**
(45) Veröffentlichungstag und Bekanntmachung des Hinweises auf die Patenterteilung: **28.07.2004**
(21) Anmeldenummer: 00971104.5
(22) Anmeldetag: 11.05.2000
(51) Int. Cl.: A01J 5/04

(54) **FLEXIBLER MILCHSCHLAUCH FÜR EINE AUTOMATISCHE MELKANLAGE**
FLEXIBLE MILKING TUBE FOR AN AUTOMATIC MILKING PLANT
TUYAU A LAIT FLEXIBLE POUR UNE INSTALLATION DE TRAITE AUTOMATIQUE

(30) Priorität: 12.05.1999 DE 19922131
(43) Veröffentlichungstag der Anmeldung: 06.02.2002
(73) Patentinhaber: Maier, Jakob, Jun., 86842 Türkheim (DE)
(72) Erfinder: Maier, Jakob, Jun., 86842 Türkheim (DE)
(74) Vertreter: Pfau, Anton Konrad, Dr.
(86) Internationale Anmeldenummer: PCT/EP2000/004281
(87) Internationale Veröffentlichungsnummer: WO 2000/069252

(56) Entgegenhaltungen:
- GB-A- 2 145 915
- US-A- 3 999 516
- US-A- 4 324 201

## Beschreibung

Die vorliegende Erfindung betrifft einen Milchschlauch zum Herstellen einer Fluidverbindung, insbesondere zum Verbinden eines Melkbechers mit einem Mehrwegeventil in einer automatischen Melkanlage.

Die zunehmende Globalisierung der Märkte auf dem Agrarbereich hat zur Folge, daß auch in den landwirtschaftlichen Betneben zunehmend rationalisiert werden muß. In milchproduzierenden Betrieben werden daher fast ausschließlich automatische Melkanlagen verwendet. Diesen Anlagen fällt daher die Aufgabe zu, einerseits die Kapazität der Milchförderung beim Melken deutlich zu erhöhen, d.h. mehr Tiere pro Zeiteinheit zu melken, um somit die Produktivität des landwirtschaftlichen Betriebs zu erhöhen, andererseits aber physische und auch psychische Belastungen für die Tiere, die durch den maschinellen Melkprozeß verursacht werden, auf ein Minimum zu reduzieren.

Eine ideale Melkanlage sollte daher die Eigenschaft haben, einen großen, dem Niveau heutiger Hochleistungskühe angepaßten Milchstrom beim Melken verarbeiten zu können, dabei aber den natürlichen Saugvorgang eines Kalbes am mütterlichen Euter zu simulieren. Nur ein dem natürlichen Saugen angepaßter Melkvorgang gewährleistet eine vollständige Entleerung des Euters und damit einen hohen Milchertrag, die Gesundheit der Zitzen und des Euters, sowie ein mentales Wohlbefinden des Tieres, was sich auf lange Sicht ebenso in einem erhöhten Milchertrag niederschlägt. Beim Melkvorgang ist jegliche Behandlung und jede Vorrichtung, die ein Unwohlsein des Tieres verursachen könnte, zu vermeiden. Insbesondere der Bereich der Melkanlage, der mit den Zitzen des Tieres mittelbar oder unmittelbar in Kontakt ist, muß so ausgebildet sein, jeglichen für das Tier unangenehmen Reiz zu verhindern.

Mit den heute fast ausschließlich verwendeten Melkanlagen wird die Milch mittels einem mit einem weichen Zitzengummi ausgekleidetem Melkbecher während der Saugphase aus der Zitze abgesaugt. Während dieser Saugphase haftet der Melkbecher ausschließlich aufgrund des in der Anlage vorherrschenden Betriebsvakuums an der Zitze. Die abgesaugte Milch gelangt dann über einen Verbindungsschlauch, dem sogenannten kurzen Milchschlauch, in ein Mehrwegeventil, von wo die Milch dann in unterschiedliche Leitungssysteme oder Auffangbehälter weitergeleitet wird. Während einer zweiten Phase, der sogenannten Entlastungsphase, wird über einen dünnen flexiblen Schlauch Luft mit Atmospharendruck in den Zwischenraum zwischen dem Zitzengummi und dem Melkbecher geleitet, so daß sich der Zitzengummi aufgrund des in seinem Inneren herrschenden Unterdrucks kontrahiert und damit den Milchstrom von der Zitze zum Auslauf des Melkbechers unterbindet. In dieser Phase schmiegt sich der Zitzengummi teilweise an die Zitze an und die Haftung des Melkbechers an der Zitze wird durch die zusätzliche Reibung mit dem Zitzengummi zum weiterhin bestehenden Vakuum erhöht.

Das Umschalten von der Saugphase zur Entlastungsphase geschieht etwa 60mal pro Minute und führt aufgrund der auftretenden Druckschwankungen beim Übergang zwischen den beiden Phasen sowie der veränderten Haftungsbedingungen des Melkbechers an der Zitze zu leichten Stößen bzw. Schwingungen. Aufgrund der unterschiedlichen Haftbedingungen an der Zitze ist es in Deutschland überwiegend üblich, die Melkanlage im Wechseltakt zu betreiben, d.h. zwei Melkbecher sind in der Saugphase, während sich die beiden anderen in der Entlastungsphase befinden.

Die Melkbecher sind im wesentlichen über die vier kurzen Milchschläuche mit dem Mehrwegeventil und damit auch untereinander mechanisch gekoppelt. Da die kurzen Milchschläuche sowohl den Milchstrom als auch das Betriebsvakuum übertragen müssen, hat sich bei bestehenden Anlagen ein Innendurchmesser von etwa 9-11 mm als günstig erwiesen. Zugleich besteht aus der Milchverordnung die Forderung, daß keine Fremdstoffe aus Leitungen oder Behältern in die Milch übergehen dürfen. Da die Milchschläuche aus Kunststoff hergestellt werden, um eine möglichst hohe Flexibilität zu gewährleisten, führen die Anforderungen einer hohen mechanischen Stabilität einerseits (der Innendurchmesser des Milchschlauchs darf sich bei einem Unterdruck von etwa 0,5-0,7 bar nicht nennenswert verformen, um die Fließgeschwindigkeit des Milchstroms nicht negativ zu beeinflussen) und der chemischen Passivität des Schlauchmaterials andererseits (es dürfen gewisse Zusatzstoffe, die eine Stabilität des Materials bei geringerer Wandstärke bewirken, nicht verwendet werden) zu Ausführungsformen des Milchschlauches mit einer relativ großen Wandstärke. Als Folge davon ist eine eigentlich gewünschte Flexibilität der kurzen Milchschläuche stark eingeschränkt. Eine Folge davon ist eine relativ starke mechanische Kopplung der vier Melkbecher untereinander über die Milchschläuche und das Mehrwegeventil und führt dazu, daß veränderte äußere Bedingungen an einer Zitze sich ebenso auf alle anderen Melkbecher auswirkt. Beispielsweise bewirkt die relativ starre Verbindung der Melkbecher untereinander, daß bei der unterschiedlichen Entleerung der Euterviertel während des Melkvorgangs, wobei ein Melkbecher entsprechend der Entleerung des Euterviertels allmählich bis zum Anschlag seines Öffnungsrandes nach oben rückt ("Klettern"), ebenso Einfluß auf die restlichen Melkbecher ausübt. Dies führt zu Verspannungen am Euter und damit zu einer Reizung des Tieres und kann zu einer vorzeitigen Unterbrechung des Milchstroms bei den noch nicht entleerten Eutervierteln führen.

Femer ist mit den ständigen, auf die kurzen Milchschläuche einwirkenden Torsionsund Biegekräfte ein hoher Verschleiß der kurzen Milchschläuche mit einem damit einhergehenden Materialbruch insbesondere an den Übergangsstellen zu den Anschlußstutzen zu den Melkbechem bzw. dem Wegeventil verbunden.

Es ist daher eine Aufgabe der vorliegenden Erfindung, kurze Milchschläuche bereitzustellen, die den eingangs erwähnten Forderungen besser gerecht werden als die herkömmlich verwendeten Milchschläuche.

Ein flexibler Milchschlauch mit den Merkmalen des Oberbegriffs von Anspruch 1 ist aus US-A-3 999 516 bekannt.

Die obergenannte Aufgabe wird durch die vorliegende Erfindung dadurch gelöst, daß ein flexibler Milchschlauch bereitgestellt wird, der dadurch gekennzeichnet ist, daß er ein Mittelstück aufweist, welches eine höhere Flexibilität als die beiden Endbereiche besitzt, wobei die höhere Flexibilität zur Mitte des Mittelstücks hin anwachsend ist.

Durch den erfindungsgemäßen Aufbau des Mittelstücks des Milchschlauchs gelingt es durch die Vergrößerung der Elastizität in einem definierten Bereich (Mittelstück) des Milchschlauchs Torsions- und Biegekräfte durch elastische Verformung aufzunehmen, wobei die Endbereiche insbesondere am Übergang zu den Anschlußstutzen kaum belastet werden. Dies wird insbesondere durch die zur Mitte hin anwachsende Flexibilität des Milchschlauchs unterstützt, da der Biegeradius des Milchschlauchs in der Nähe der Endbereiche größer ist als im Bereich der Mitte und somit die mechanische Beanspruchung an den Endbereichen geringer ist.

Vorteilhafterweise umfaßt das Mittelstück voneinander beabstandete Verstärkungselemente, die zumindest teilweise den Umfang eines Bereichs des Mittelstücks umschließen. Eine derartige Struktur erlaubt eine grundsätzlich geringere Wandstärke als dies für einen Milchschlauch ohne Verstärkungselemente möglich ist. Die Bereiche zwischen den Verstärkungselementen haben daher eine hohe Elastizität, wobei die Stabilität gegenüber der Druckdifferenz von den Verstärkungselementen gewährleistet wird.

Geeigneterweise bestehen die Verstärkungselemente zumindest teilweise aus einem Material, dessen Elastizität geringer ist als die des Materials, aus dem ein Bereich zwischen den beabstandeten Verstärkungselementen besteht. Ein großer Unterschied in der Elastizität der aufeinanderfolgenden Bereiche ermöglicht beispielsweise sehr formstabile Verstärkungselemente zu schaffen, so daß der Abstand größer gewählt werden kann, was wiederum zu einer größeren Elastizität des Zwischenraums (Material hoher Elastizität) und damit des gesamten Mittelstücks führt.

In einer weiteren bevorzugten Ausführungsform enthalten die Verstärkungselemente ein Metall oder einem Kunststoff mit größerer Härte als der Schlauch. Eine minimale Ausdehnung bei hoher Festigkeit kann dadurch erreicht werden, wenn beispielsweise Ringe oder Klammern aus Metall oder hartem Kunststoff in der Schlauchwand des Mittelteils integriert werden.

In weiterer vorteilhafter Ausgestaltung nimmt der Abstand der Verstärkungselemente von der Mitte des Mittelstücks in Richtung jeweils zum ersten und zum zweiten Endbereich hin ab. Durch diese Anordnung wird erreicht, daß die Flexibilität des Milchschlauchs von der Mitte hin nach außen abnimmt, wodurch gewährleistet ist, daß eine Biegung des Elements im wesentlichen in der Mitte des Schlauchs auftritt.

In einer weiteren bevorzugten Ausführungsform sind die Verstärkungselemente als den Umfang des Mittelstücks zumindest teilweise umschließenden, jeweils voneinander beabstandete Erhebungen ausgebildet. Diese Struktur der Verstärkungselemente hat den Vorteil, daß die Verstärkungselemente möglicherweise nachträglich auf einen entsprechend geformten Milchschlauch aufgebracht werden können.

Vorteilhafterweise ist die Wandstärke in einer Erhebung größer als die Wandstärke in einem Bereich, in dem keine voneinander beabstandeten Erhebungen vorhanden sind. Durch das erhöhte Materialvorkommen im Bereich einer Erhebung wird die notwendige mechanische Stabilität gegenüber den auftretenden Druckdifferenzen gewährleistet, auch wenn sich beim Biegen des Mittelstücks die effektive Wandstärke der Bereiche zwischen zwei Erhebungen am kurvenäußeren Rand des Schlauchs reduziert. Es ist daher möglich, das Mittelstück aus einem einheitlichen Material zu fertigen.

In einer weiteren bevorzugten Ausführungsform ist der flexible Milchschlauch gänzlich aus einem einheitlichen Material hergestellt. Die Milchschläuche lassen sich dadurch kostengünstig herstellen.

In weiterer vorteilhafter Ausgestaltung der vorliegenden Erfindung weisen die Erhebungen und die Bereiche zwischen jeweils zwei benachbarten beabstandeten Erhebungen eine im wesentlichen gleiche Wandstärke auf. Durch diesen, einem Faltenbalg ähnlichen Aufbau hat der Milchschlauch eine besonders große Flexibilität und ist insbesondere auch in der Längsrichtung dehn- bzw. stauchbar. Durch Vergrößerung der Wandstärke in diesem Bereich kann trotz des faltenbalgähnlichen Aufbaus durch die erhöhte Wandstärke eine gute Stabilität gegen Verformungen des Innendurchmessers aufgrund von Druckschwankungen unter gleichzeitiger Beibehaltung einer hohen Flexibilität, insbesondere in der Längsrichtung, erreicht werden. Ferner ist diese Ausführungsform besonders geeignet, den natürlichen Saugvorgang des Kalbs an der Zitze des Muttertieres nachzubilden, indem beim Umschalten von der Saugphase in die Entlastungsphase eine Stauchung bzw. eine Dehnung in Längsrichtung des Mittelstücks des flexiblen Milchschlauchs stattfindet. Aufgrund dieser abwechselnden Dehnung und Stauchung des Milchschlauchs wird die durch die Druckdifferenzen bei der Phasenumschaltung erzeugte Pendelbewegung des Melkzeugs verstärkt und es tritt eine zusätzliche Stimulierung der Zitzen sowie eine Lockerung der Eutermuskulatur ähnlich wie beim Trinken des Kalbes im Rhythmus des Wechseltakts ein.

In einer weiteren bevorzugten Ausführungsform ist jeweils am ersten und am zweiten Endbereich ein Versteifungselement ausgebildet. Durch diese Maßnahme wird insbesondere im Anschlußbereich des Milchschlauchs eine größere Biegesteifigkeit erzielt, wodurch bei mechanischer Belastung des Milchschlauchs die Verbiegung im wesentlichen im dafür vorgesehenen Mittelstück auftritt. Es wird dadurch die Gefahr des Risses des Schlauchs, insbesondere am Übergang vom Anschlußstutzen zum Verbindungselement, reduziert.

Vorteilhafterweise weisen die Versteifungselemente eine größere Wandstärke als der restliche Bereich des ersten und zweiten Endbereichs auf. Es kann damit eine Versteifung der Endbereiche erzielt werden, auch wenn der Milchschlauch einheitlich aus einem Material gefertigt ist.

In einer weiteren bevorzugten Ausführungsform weist der Innendurchmesser des Mittelstücks in dem Bereich keine Schwankungen auf. Durch diese Ausführungsform wird das Fließen des Milchstroms durch Wechselwirkung mit der inneren Oberfläche, beispielsweise durch Wirbelbildungen an Einbuchtungen an der Oberfläche, nicht beeinträchtigt. Weiterhin ist die Reinigung des Fluidverbindungselements einfach.

In einer weiteren bevorzugten Ausführungsform nimmt die Wandstärke des Mittelstücks jeweils vom ersten und zweiten Endbereich hin zur Mitte des Mittelstücks ab.

Dadurch läßt sich der Milchschlauch in einfacher Weise herstellen, da die Außenfläche als glatte Oberfläche ausgebildet sein kann. Die minimale Wandstärke im Bereich der Mitte wird dabei so gewählt, dass noch eine ausreichende Formstabilität des Milchschlauchs unter Vakuum sichergestellt ist. Die Wandstärke des Mittelstücks nimmt dabei vorzugsweise kontinuierlich zur Mitte hin ab. Es ist jedoch auch möglich, einen stufenartigen Verlauf der Wandstärke vorzusehen, wobei die axiale Ausdehnung jedes Bereichs unterschiedlicher Wandstärke gleich oder auch unterschiedlich sein kann.

In einer weiteren bevorzugten Ausführungsform ist die Wandstärke der Verstärkungselemente im Bereich der Mitte des Mittelstücks kleiner als die Wandstärke der am Randbereich des Mittelstücks angeordneten Verstärkungselemente.

In einer weiteren bevorzugten Ausführungsform nimmt die Wandstärke der Verstärkungselemente zur Mitte des Mittelstücks hin kontinuierlich ab.

In einer weiteren bevorzugten Ausführungsform ist die Wandstärke der Zwischenbereiche zwischen zwei benachbarten Verstärkungselementen im Bereich der Mitte des Mittelstücks kleiner als die Wandstärke der Zwischenbereiche der am Randbereich des Mittelstücks angeordneten Verstärkungselemente.

In einer weiteren bevorzugten Ausführungsform nimmt die Wandstärke der Zwischenbereiche zur Mitte des Mittelstücks hin kontinuierlich ab.
Die Erfindung soll nun anhand von Ausführungsbeispielen und den beiliegenden, sich auf diese Ausführungsbeispiele beziehenden Zeichnungen näher erläutert und beschrieben werden. Es zeigen:
- Fig. 1: eine prinzipielle dreidimensionale Darstellung eines Melkzeuges;
- Fig. 2: eine Seitenansicht einer Ausführungsform des Milchschlauchs gemäß der vorliegenden Erfindung;
- Fig. 3: einen Querschnitt der Ausführungsform nach Fig. 1;
- Fig. 4: eine Darstellung des Milchschlauchs der vorliegenden Erfindung in gebogenem Zustand; und
- Fig. 5: einen Querschnitt einer weiteren Ausführungsform des Milchschlauchs der vorliegenden Erfindung.
- Fig. 6a - 6d: jeweils einen Querschnitt durch den Mittenbereich des Mittelstücks des Milchschlauchs gemäß weiteren bevorzugten Ausführungsformen.

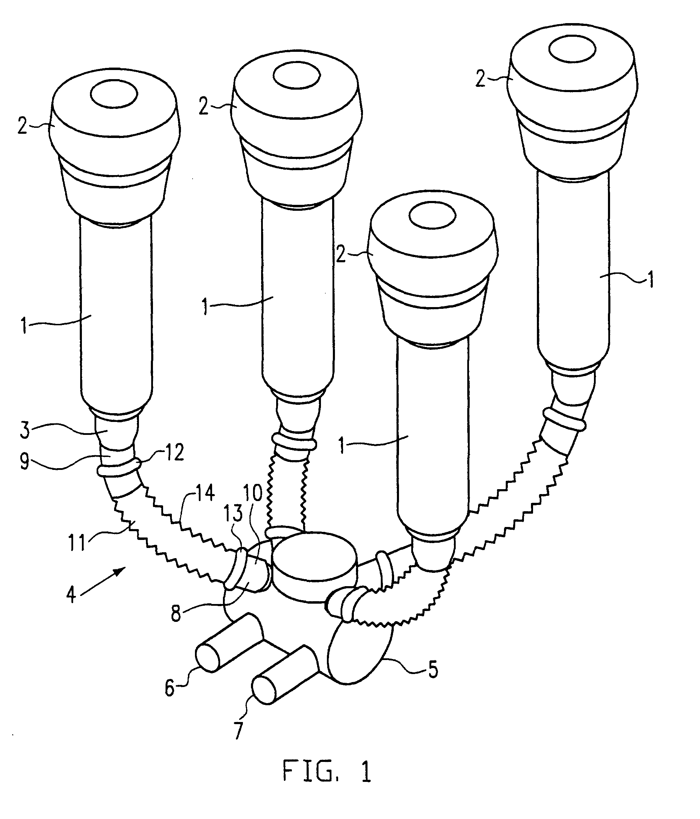

Eine erste Ausführungsform wird nun anhand der Figuren 1, 2 und 3 erläutert.

Fig. 1 zeigt den prinzipiellen Aufbau eines Melkzeuges unter Verwendung von kurzen Milchschläuchen entsprechend einer Ausführungsform der vorliegenden Erfindung. Bezugsziffer 1 bezeichnet die vier Melkbecher, an deren oberen Rand die Ausstülpung des Zitzengummis 2 ausgebildet ist. Am anderen Ende des Melkbechers 1 befindet sich der Auslaßstutzen 3. Der Zitzengummi 2 erstreckt sich innerhalb des Melkbechers 1 bis zum Auslaßstutzen 3. Ein Einlaßstutzen für die Anschlußleitung, mit der Frischluft zum Umschalten von der Saugphase in die Entlastungsphase in den Bereich zwischen Melkbecher 1 und Zitzengummi 2 eingeblasen wird, wurde der Übersichtlichkeit halber in Fig. 1 nicht dargestellt. An den Auslaßstutzen 3, die an den Zitzengummis ausgebildet oder angebraucht sind, sind kurze Milchschläuche 4 angeschlossen. Der Zitzengummi und die kurzen Milchschläuche könnten, anstelle von separaten Teilen, auch einstückig ausgebildet sein (langer Zitzengummi).

Ein Mehrwegeventil 5 mit Milcheinlaßstutzen 8 und Milchausgängen 6 und 7 ist mittels der kurzen Milchschläuche 4 mit den Melkbechem 1 verbunden. Der kurze Milchschlauch 4 weist einen ersten Endbereich 9, der über den Anschlußstutzen 3 geschoben ist und einen zweiten Endbereich 10, der über Anschlußstutzen 8 geschoben ist, sowie ein Mittelstück 11 auf. Die Endbereiche 9 und 10 weisen jeweils wulstartige Verdickungen 12 bzw. 13 auf, die die Steifigkeit dieses Bereichs erhöhen. Damit ist ein in den Anschlußbereichen häufig auftretendes Abknicken der Leitungen ausgeschlossen. Das Mittelstück 11 des kurzen Milchschlauchs 4 besitzt über einen gewissen Bereich beabstandete ringförmige Erhebungen 14.

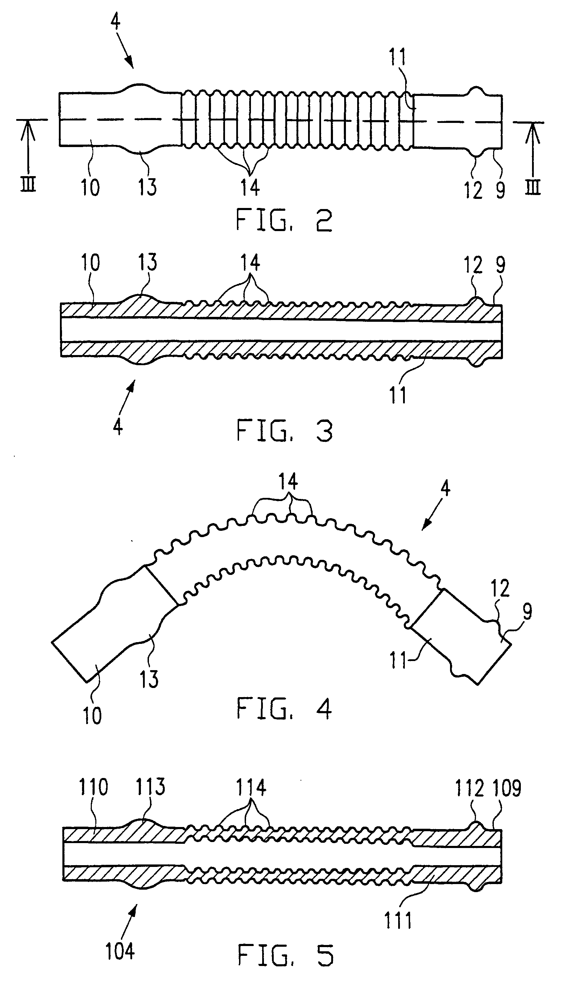

In Fig. 2 ist eine Seitenansicht des kurzen Milchschlauchs 4 entsprechend der ersten Ausführungsform der vorliegenden Erfindung gezeigt. In Fig. 2 sind identische Teile mit gleichen Bezugsziffern wie in Fig. 1 bezeichnet. Es ist zu erkennen, daß in dieser Ausführungsform die jeweiligen Erhebungen in der Mitte des Mittelstücks 11 eine geringere axiale Ausdehnung als in den Endbereichen 10 bzw. 9 des Mittelstücks aufweisen. Die Dichte der Erhebungen, d.h. deren Anzahl pro Einheitslänge, bleibt vorzugsweise über die Länge des Mittelstücks 11 konstant. Die Erhebungen 14 in dieser Ausführungsform sowie alle weiteren Komponenten des kurzen Milchschlauchs 4 sind aus einheitlichem, elastischem Material hergestellt. Es ist selbstverständlich möglich, verschiedene Matenalien für die verschiedenen Bereiche zu verwenden. So könnten beispielsweise die Endbereiche 10 und 9 aus einer Materialmischung bestehen, die Zusätze aufweist, die das Material stabiler machen, da diese Bereiche nicht unmittelbar mit dem Milchstrom in Berührung kommen. Weiterhin ist es denkbar, die Erhebungen mit einheitlicher, aber genngerer Breite auszubilden, dafür aber mit Verstärkungsringen bzw. Klammern aus einem mechanisch sehr stabilen Material zu versehen. Beispielsweise könnten Metallringe bzw. Metallklammern eine hohe mechanische Stabilität bei gleichzeitiger minimaler Ausbildung der Breite einer Erhebung gewährleisten.

Fig. 3 zeigt einen kurzen Milchschlauch 4 in einem Querschnitt entlang der Linie 2-2 aus Fig. 2. Gleiche Teile wurden wieder mit gleichen Bezugszeichen entsprechend den Figuren 1 und 2 belegt. Die in diesen Figuren gezeigte Ausführungsform des Milchschlauchs 4 weist eine glatte innere Oberfläche 15 auf.

In Fig. 4 ist die in den Figuren 1 bis 3 gezeigte Ausführungsform im gebogenen Zustand in seitlicher Darstellung gezeigt. In dieser Darstellung ist erkennbar, daß bei einer Biegung des kurzen Milchschlauchs 4 die Erhebungen 14 in der Mitte des Mittelstücks 11 an der kurvenäußeren Seite gedehnt werden, wohingegen die Erhebungen 14 in der Nähe der Endbereiche 10 und 9 ihre axiale Ausdehnung nahezu beibehalten. An der kurveninneren Seite werden entsprechend die Erhebungen 14 in der Mitte stärker gestaucht als jene in der Nähe der Endbereiche. Der Milchschlauch 4 weist also in der Mitte des Mittelstücks eine größere Krümmung auf als in der Nähe der Endbereiche.

Beim Melkvorgang sowie bei der Handhabung des Melkzeuges treten aufgrund von mechanischen Einwirkungen und Druckschwankungen mehr oder weniger große Lageänderungen der Melkbecher und damit des relativ schweren Wegeventils auf. Aufgrund der verbesserten Elastizität des kurzen Milchschlauchs 4 gemäß den Ausführungsformen der vorliegenden Erfindung kann der jeweilige Melkbecher den Bewegungen folgen, ohne daß diese kleinen Positionsänderungen nennenswert auf das Wegeventil und damit auf die benachbarten Melkbecher übertragen werden. Vorteilhafterweise liegt dabei der Bereich, in dem der kurze Milchschlauch 4 eine besonders hohe Flexibilität aufweist, in der Mitte und nimmt nach außen hin ab. Dadurch werden insbesondere die mechanischen Kräfte auf den kurzen Milchschlauch in den Bereichen der Anschlußstutzen 3 und 8 deutlich verringert und die Gefahr von Materialbruch aufgrund von Materialermüdungen in diesem Bereich deutlich reduziert. Ein weiterer Vorteil gegenüber den kurzen Milchschläuchen gemäß dem Stand der Technik liegt in der Tatsache, daß der kurze Milchschlauch gemäß der vorliegenden Erfindung auch eine gewisse Flexibilität in axialer Richtung des Schlauches aufweist. Somit können insbesondere Änderungen in der Position des Melkbechers, die beim Melkvorgang aufgrund des eingangs beschriebenen Effektes des "Kletterns" des Melkbechers hervorgerufen wird, ausgeglichen werden. Das heißt, das "Klettern" eines Melkbechers an einer bereits entleerten Zitze führt zu keiner nennenswerten Lageänderung des Mehrwegeventils, wobei eventuell verbleibende geringe Lageänderung wiederum von den anderen Melkbechern aufgrund der erfindungsgemäßen kurzen Milchschläuche entkoppelt ist.

Fig. 5 zeigt einen Querschnitt durch einen kurzen Milchschlauch entsprechend einer weiteren Ausführungsform der vorliegenden Erfindung. Ein kurzer Milchschlauch 104 weist jeweils Endbereiche 109 und 110 auf. An den Endbereichen 109 und 110 sind jeweils wulstartige Verdickungen 112 bzw. 113 ausgebildet. Ein Mittelstück 111 weist in einem Bereich Erhebungen 114 auf. Im Unterschied zu den vorangegangenen Ausführungsformen ist die Wandstärke der Erhebungen und der Bereiche zwischen je zwei benachbarten Erhebungen in etwa gleich. Durch diesen Aufbau wird eine besonders hohe Flexibilität erreicht. Vorteilhafterweise wird durch diese faltenbalgähnliche Struktur eines Teils des Mittelstücks 111 eine hohe Flexibilität in axialer Richtung des kurzen Milchschlauchs erreicht. Der Effekt des Höhenausgleichs der Melkbecher während des Melkvorgangs wird dadurch begünstigt. Weiterhin läßt sich die hohe axiale Flexibilität des Mittelstücks 111 dazu nutzen, eine Pendelbewegung des gesamten Melkzeugs im Rhythmus der Phasenumschaltung zu erzeugen, um damit eine zusätzliche Stimulierung der Zitzen sowie eine Lockerung der Eutermuskulatur zu erreichen. In der Saugphase liegt an den Zitzen und damit auch im kurzen Milchschlauch ein höheres Vakuum an als in der Entlastungsphase. Die Ausprägung dieses gewünschten, dem natürlichen Trinken des Kalbs nachempfundenen Verhaltens ist jedoch stark von der jeweiligen Melkanlage und deren Betriebsweise abhängig. Während der Saugphase herrscht ein Unterdruck, der je nach Anlage mehr oder weniger dem Saugvorgang des Kalbes angepaßt ist, an der Zitze und damit im Milchschlauch. Durch diesen Unterdruck wird eine Kontraktion des Mittelstücks 111 in der Saugphase bewirkt und damit das Wegeventil leicht angehoben. In der Entlastungsphase hingegen führt der reduzierte Unterdruck zu einer Dehnung des Mittelstücks 111 und damit zu einer Absenkung des Wegeventils. Dadurch wird eine Pendelbewegung des Wegeventils und der Milchschläuche verursacht, die zu einer zusätzlichen, den Michstrom fördernden Stimulierung der Zitzen und Lockerung der Eutermuskulatur führt. Besonders vorteilhaft läßt sich der Effekt der Pendelbewegung des Melkzeugs aufgrund der erhöhten axialen Flexibilität der Mittelstücke der kurzen Milchschläuche in Verbindung mit Melkanlagen, die eine ausreichende Regulierung der Unterdruckdifferenz während der Saug- bzw. Entlastungsphase gestatten, einsetzen, da dann die Längenänderungen besonders ausgeprägt sind. In der DE 2523465 ist beispielsweise ein Melkbecher beschrieben, bei dem bei Beginn der Entlastungsphase eine geringe, genau definierte Menge atmosphärischer Luft im Bereich zwischen den sich zusammenfaltenden, die Zitze umschließenden Zitzengummi und dem abfließenden Milchpfropfen eingeblasen wird, wodurch ein ungestörter Milchabfluß aufgrund des verringerten Unterdrucks über dem Milchpfropfen ermöglicht wird. Ohne das Einblasen von Luft in diesen Bereich würde sich überhalb des gerade abfließenden Milchpfropfens ein Bereich mit erhöhten Unterdruck ausbilden und damit aufgrund der Sogwirkung nur ein teilweises Abfließen des Milchpfropfens stattfinden. Aufgrund der zusätzlichen Luftmenge ist jedoch ein ungestörtes Abfließen der Milch möglich und es bildet sich auch im kurzen Milchschlauch im Vergleich zur Saugphase ein reduzierter Unterdruck aus, so daß im kurzen Milchschlauch während der beiden Arbeitsphasen ein deutlicher Druckunterschied besteht. Die mechanische Stimulierung der Zitzen und die Lockerung der Eutermuskulatur führt nicht nur zu einer Verstärkung des Milchstroms, sondern fördert auch die Gesundheit des Euters und hat damit auch eine langfnstige Erhöhung der Milchausbeute zur Folge. Um die Stabilität gegenüber einer Änderung des Innendurchmessers aufgrund des Unterdrucks im Inneren des Schlauches zu erhöhen, kann beispielsweise die mittlere Wandstärke in dem Bereich des Mittelstücks 111, das die faltenbalgähnliche Struktur aufweist, größer gewählt werden als die Wandstärke des Mittelstücks im Bereich, in dem keine Erhebungen ausgebildet sind. Ferner ist es auch hier denkbar, dünne Verstärkungsnnge oder Klammern, die lediglich einen Teil des Umfangs umfassen, an den Erhebungen anzubringen, um damit die nötige Stabilität zu erreichen.

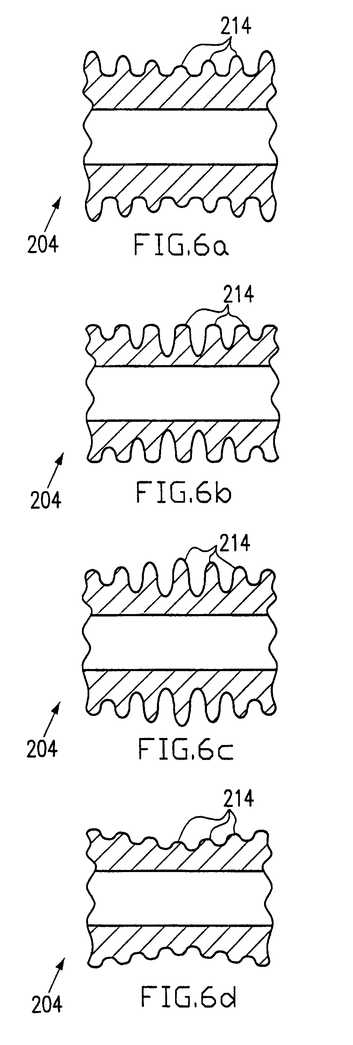

Die Fig. 6a bis 6d zeigen jeweils einen Querschnitt durch den Mittenbereich des Mittelstücks weiterer Ausführungsformen des erfindungsgemäßen Milchschlauchs.

In Fig. 6a weist ein Mittenbereich 204 eines flexiblen Milchschlauchs Verstärkungselemente 214 auf. Die Verstärkungselemente 214, die aus dem gleichen Material wie der restliche Milchschlauch gefertigt sein können, haben zur Mitte hin eine abnehmende Wandstärke, d.h. die zusätzliche Materialschicht der Verstärkungselemente wird zur Mitte hin dünner. In Fig. 6a ist das zentrale Verstärkungselement als das Element mit der dünnsten Materialschicht dargestellt und die weiter außen liegenden Elemente weisen eine zunehmend dickere Materialschicht bzw. Wandstärke auf. Es ist aber auch möglich, dass eine Gruppe mehrerer Verstärkungselemente gleiche Wandstärken aufweisen und die zentral gelegene Gruppe die kleinste Wandstärke besitzt. Der Außendurchmesser des Milchschlauchs wird also durch die reduzierte Wandstärke zur Mitte hin kleiner.

In Fig. 6b bleibt der Außendurchmesser näherungsweise gleich. Die Zunahme der Flexibilität zur Mitte hin wird dadurch erreicht, dass die Zwischenbereiche zwischen den Verstärkungselementen 214 eine zunehmend geringere Wandstärke aufweisen.

Fig. 6c zeigt eine Ausführungsform, in der die Wandstärke der Zwischenbereiche zur Mitte hin abnimmt, während die Wandstärke der Verstärkungselemente 214 zur Mitte hin etwas zunimmt, um eine bessere Formstabilität des Mittenbereichs 204 zu gewährleisten. Durch die kleinere Wandstärke in der Mitte ist aber dennoch sichergestellt, dass die Flexibilität zur Mitte hin zunimmt.

Fig. 6d zeigt eine Ausführungsform, in der die Verstärkungselemente 214 mit gleicher Wandstärke ausgebildet sind, dies aber sozusagen auf einem Mittelstück mit zur Mitte hin abnehmender Wandstärke angeordnet sind. Dies ist unter Umständen vorteilhaft gegenüber der in Fig 6a gezeigten Ausführungsform, da die Verstärkungselemente in Fig. 6d weniger empfindlich gegenüber äußeren mechanischen Belastungen, wie beispielsweise Trittbelastung, sind.

In einer weiteren Ausführungsform wird gänzlich auf Verstärkungselemente verzichtet und die Wandstärke des Mittelstücks wird zur Mitte hin reduziert. Die Verringerung der Wandstärke kann dabei kontinuierlich oder auch abgestuft erfolgen.

## Patentansprüche

1. Flexibler Milchschlauch (4) zum Verbinden eines Melkbechers (1) mit einem Mehrwegeventil (5) in einer automatischen Melkanlage, mit:
einem ersten Endbereich (9) zum Anschluß an einen Anschlußstutzen des Melchbechers,
einem zweiten Endbereich (10) zum Anschluß an einen Anschlußstutzen des Mehrwegeventils, und
einem Mittelstück (11),
**dadurch gekennzeichnet, daß**
das Mittelstück (11) eine höhere Flexibilität aufweist als der erste und zweite Endbereich, wobei die höhere Flexibilität zur Mitte des Mittelstücks hin anwachsend ist.

2. Flexibler Milchschlauch gemäß Anspruch 1,
**dadurch gekennzeichnet, daß**
das Mittelstück (11) voneinander beabstandete Verstärkungselemente (14), die zumindest teilweise den Umfang eines Bereichs des Mittelstücks umschließen, umfaßt.

3. Flexibler Milchschlauch gemäß Anspruch 2,
**dadurch gekennzeichnet, daß**
die Verstärkungselemente zumindest teilweise aus einem Material bestehen, dessen Elastizität geringer ist als die eines Materials, aus dem ein Bereich zwischen den beabstandeten Verstärkungselementen besteht.

4. Flexibler Milchschlauch gemäß Anspruch 3,
**dadurch gekennzeichnet, daß**
die Verstärkungselemente ein Metall oder Kunststoff oder andere Materialien mit höherer Härte als der Milchschlauch enthalten.

5. Flexibler Milchschlauch gemäß Anspruch 3 oder 4,
**dadurch gekennzeichnet, daß**
der Abstand jeweils zweier benachbarter Verstärkungselemente von der Mitte des Mittelstücks in Richtung jeweils zum ersten und zum zweiten Endbereich hin abnimmt.

6. Flexibler Milchschlauch gemäß einem der Ansprüche 1, 2 oder 5,
**dadurch gekennzeichnet, daß**
die Verstärkungselemente als den Umfang des Mittelstücks zumindest teilweise umschließenden, jeweils voneinander beabstandete Materialerhebungen ausgebildet sind.

7. Flexibler Milchschlauch gemäß Anspruch 6,
**dadurch gekennzeichnet, daß**
eine Wandstärke der Materialerhebungen größer ist als eine Wandstärke in einem Bereich zwischen benachbarten, beabstandeten Materialerhebungen.

8. Flexibler Milchschlauch gemäß Anspruch 6,
**dadurch gekennzeichnet, daß**
die Materialerhebungen und die Bereiche zwischen jeweils zwei benachbarten Materialerhebungen eine im wesentlichen gleiche Wandstärke aufweisen.

9. Flexibler Milchschlauch gemäß einem der Ansprüche 1 bis 8,
**dadurch gekennzeichnet, daß**
jeweils am ersten und am zweiten Endbereich ein Verstärkungselement (12, 13) ausgebildet ist.

10. Flexibler Milchschlauch gemäß Anspruch 9,
**dadurch gekennzeichnet, daß**
die Verstärkungselemente (12, 13) jeweils Materialverdickungen mit größerer Wandstärke als der jeweilige restliche Bereich des ersten und zweiten Endbereichs aufweisen.

11. Flexibler Milchschlauch gemäß einem der Ansprüche 1 bis 10,
**dadurch gekennzeichnet, daß**
das Mittelstück zumindest teilweise aus einem dauerhaft chemisch passiven und stabilen Material besteht, das keine Aussonderungen in die Milch während des Melkens abgibt.

12. Flexibler Milchschlauch nach Anspruch 1, **dadurch gekennzeichnet, daß** eine Wandstärke des Mittelstücks jeweils vom ersten und zweiten Endbereich hin zur Mitte des Mittelstücks abnehmend ist.

13. Flexibler Milchschlauch nach einem der Ansprüche 2 bis 10, **dadurch gekennzeichnet, daß** die Wandstärke der Verstärkungselemente im Bereich der Mitte des Mittelstücks kleiner ist als die Wandstärke der am Randbereich des Mittelstücks angeordneten Verstärkungselemente.

14. Flexibler Milchschlauch nach Anspruch 13, **dadurch gekennzeichnet, daß** die Wandstärke der Verstärkungselemente zur Mitte des Mittelstücks hin kontinuierlich abnimmt.

15. Flexibler Milchschlauch nach einem der Ansprüche 2 bis 14, **dadurch gekennzeichnet, daß** die Wandstarke der Zwischenbereiche zwischen zwei benachbarten Verstärkungselementen im Bereich der Mitte des Mittelstücks kleiner ist als die Wandstarke der Zwischenbereiche der am Randbereich des Mittelstücks angeordneten Verstärkungselemente.

16. Flexibler Milchschlauch nach Anspruch 15, **dadurch gekennzeichnet, daß** die Wandstärke der Zwischenbereiche zur Mitte des Mittelstücks hin kontinuierlich abnimmt.

## Claims

1. A flexible milk hose (4) for connecting a teat cup (1) to a multiway valve (5) in an automatic milking plant, comprising:
a first end portion (9) for connection to a connecting neck of the teat cup,
a second end portion (10) for connection to a connecting neck of the multiway valve, and
a centre piece (11),
**characterized in that**
the centre piece (11) has a higher flexibility than said first and second end portions, said higher flexibility increasing towards the middle of the centre piece.

2. A flexible milk hose according to claim 1,
**characterized in that**
the centre piece (11) comprises spaced-apart reinforcement elements (14) enclosing, at least partially, the circumference of a por tion of the centre piece.

3. A flexible milk hose according to claim 2,
**characterized in that**
the reinforcement elements consist. at least partially, of a material whose elasticity is lower than that of a material forming an area between said spaced-apart reinforcement elements.

4. A flexible milk hose according to claim 3.
**characterized in that**
the reinforcement elements contain a metal or a plastic material or other materials whose hardness is greater than that of the milk hose.

5. A flexible milk hose according to claim 3 or 4,
**characterized in that**
the distance between two respective neighbouring reinforcement elements decreases from the middle of the centre piece towards the respective first and second end portions.

6. A flexible milk hose according to one of the claims 1, 2 or 5,
**characterized in that**
the reinforcement elements are implemented as spaced-apart elevations of material enclosing the circumference of the centre piece at least partially.

7. A flexible milk hose according to claim 6,
**characterized in that**
the wall thickness of the elevations of material exceeds the wall thickness in an area between neighbouring, spaced-apart elevations of material.

8. A flexible milk hose according to claim 6,
**characterized in that**
the elevations of material and the areas between two respective neighbouring elevations of material have substantially the same wall thickness.

9. A flexible milk hose according to one of the claims 1 to 8,
**characterized in that**
the first and second end portion have each formed thereon a reinforcement element (12, 13).

10. A flexible milk hose according to claim 9,
**characterized in that**
the reinforcement elements (12, 13) each comprise enlarged portions of material whose wall thickness exceeds the wall thickness of the respective residual area of the first and second end portions.

11. A flexible milk hose according to one of the claims 1 to 10,
**characterized in that**
the centre piece consists, at least partially, of a permanently chemically passive and stable material which will not give off secretions to the milk during the milking operation.

12. A flexible milk hose according to claim 1, **characterized in that** a wall thickness of the centre piece decreases from the first and second end portions towards the middle of said centre piece.

13. A flexible milk hose according to one of the claims 2 to 10, **characterized in that** the wall thickness of the reinforcement elements is smaller in the area of the middle of the centre piece than the wall thickness of the reinforcement elements arranged in the boundary area of the centre piece.

14. A flexible milk hose according to claim 13, **characterized in that** the wall thickness of the reinforcement elements decreases continuously towards the middle of the centre piece.

15. A flexible milk hose according to one of the claims 2 to 14, **characterized in that** the wall thickness of the intermediate areas between two neighbouring reinforcement elements in the area of the middle of the centre piece is smaller than the wall thickness of the intermediate areas of the reinforcement elements arranged in the boundary area of said centre piece.

16. A flexible milk hose according to claim 15, **characterized in that** the wall thickness of the intermediate areas decreases continuously towards the middle of said centre piece.

## Revendications

1. Tuyau à lait flexible (4) pour relier un gobelet trayeur (1) à une soupape à plusieurs voies (5) dans une installation de traite automatique, comportant :
une première zone d'extrémité (9) destinée à être raccordée à un raccord du gobelet trayeur,
une seconde zone d'extrémité (10) destinée à être raccordée à un raccord de la soupape à plusieurs voies, et
un élément central (11),
**caractérisé en ce que** l'élément central (11) présente une plus grande flexibilité que les première et seconde zones d'extrémité, cette flexibilité plus grande allant en augmentant vers le milieu de l'élément central.

2. Tuyau à lait flexible selon la revendication 1, **caractérisé en ce que** l'élément central (11) comprend des éléments de renforcement (14) espacés qui entourent au moins partiellement la circonférence d'une zone de l'élément central.

3. Tuyau à lait flexible selon la revendication 2, **caractérisé en ce que** les éléments de renforcement se composent au moins partiellement d'une matière dont l'élasticité est inférieure à celle d'une matière dont est composée une zone située entre les éléments de renforcement espacés.

4. Tuyau à lait flexible selon la revendication 3, **caractérisé en ce que** les éléments de renforcement contiennent un métal ou une matière plastique ou d'autres matières d'une plus grande dureté que le tuyau à lait.

5. Tuyau à lait flexible selon la revendication 3 ou 4, **caractérisé en ce que** l'écartement de deux éléments de renforcement voisins va en diminuant du milieu de l'élément central vers les première et seconde zones d'extrémité.

6. Tuyau à lait flexible selon l'une des revendications 1, 2 ou 5, **caractérisé en ce que** les éléments de renforcement sont conçus comme des bosses de matière espacées, qui entourent au moins partiellement la circonférence de l'élément central.

7. Tuyau à lait flexible selon la revendication 6, **caractérisé en ce qu'**une épaisseur de paroi desdites bosses est supérieure à une épaisseur de paroi dans une zone située entre des bosses espacées voisines.

8. Tuyau à lait flexible selon la revendication 6, **caractérisé en ce que** les bosses et les zones situées entre deux bosses voisines présentent sensiblement la même épaisseur de paroi.

9. Tuyau à lait flexible selon l'une des revendications 1 à 8, **caractérisé en ce que** des éléments de renforcement (12, 13) sont formés respectivement sur les première et seconde zones d'extrémité.

10. Tuyau à lait flexible selon la revendication 9, **caractérisé en ce que** les éléments de renforcement (12, 13) présentent des épaississements de matière avec une plus grande épaisseur de paroi que le reste des première et seconde zones d'extrémité.

11. Tuyau à lait flexible selon l'une des revendications 1 à 10, **caractérisé en ce que** l'élément central se compose au moins partiellement d'une matière durablement passive et stable chimiquement qui ne dégage pas de substances dans le lait pendant la traite.

12. Tuyau à lait flexible selon la revendication 1, **caractérisé en ce qu'**une épaisseur de paroi de l'élément central va en diminuant des première et seconde zones d'extrémité vers le milieu de l'élément central.

13. Tuyau à lait flexible selon l'une des revendications 2 à 10, **caractérisé en ce que** l'épaisseur de paroi des éléments de renforcement situés dans la zone du milieu de l'élément central est plus faible que l'épaisseur de paroi des éléments de renforcement disposés dans la zone du bord dudit élément central.

14. Tuyau à lait flexible selon la revendication 13, **caractérisé en ce que** l'épaisseur de paroi des éléments de renforcement va en diminuant continuellement vers le milieu de l'élément central.

15. Tuyau à lait flexible selon l'une des revendications 2 à 14, **caractérisé en ce que** l'épaisseur de paroi des zones intermédiaires entre deux éléments de renforcement voisins est plus faible dans la zone du milieu de l'élément central que l'épaisseur de paroi des zones intermédiaires des éléments de renforcement disposés dans la zone du bord dudit élément central.

16. Tuyau à lait flexible selon la revendication 15, **caractérisé en ce que** l'épaisseur de paroi des zones intermédiaires va en diminuant continuellement vers le milieu de l'élément central.
